# EUROPÄISCHE PATENTSCHRIFT

(11) **EP 0 770 527 B1**
(45) Veröffentlichungstag und Bekanntmachung des Hinweises auf die Patenterteilung: **13.02.2002**
(21) Anmeldenummer: 96113794.0
(22) Anmeldetag: 29.08.1996
(51) Int. Cl.: B60T 8/00

(54) **ABS- und/oder ASC-Regelsystem für Kraftfahrzeuge**
Anti-lock brake and/or drive-slip control system for vehicles
Systèmes d'antiblocage et/ou d'antipatinage pour véhicules

(30) Priorität: 23.10.1995 DE 19539345
(43) Veröffentlichungstag der Anmeldung: 02.05.1997
(73) Patentinhaber: Bayerische Motoren Werke Aktiengesellschaft, 80788 München (DE)
(72) Erfinder: Fischer, Gerhard, 80992 München (DE)

(56) Entgegenhaltungen:
- EP-A- 0 128 582

## Beschreibung

Die Erfindung bezieht sich auf ein ABS- und/oder ASC-Regelsystem für Kraftfahrzeuge nach dem Oberbegriff des Patentanspruchs 1.

Ein derartiges Regelsystem für Kraftfahrzeuge geht beispielsweise aus dem ATZ-Artikel "Bremsanlage und Schlupfregelsysteme der neuen 7er-Reihe von BMW", Januar 1995, Seite 15 ff., hervor. Dieses bekannte Regelsystem weist eine Sensorvorrichtung zur Erfassung der vier Raddrehzahlen bzw. Radgeschwindigkeiten eines Kraftfahrzeuges auf. Mittels der Signale dieser Sensorvorrichtung wird eine Blockierneigung der Räder bei starken Abbremsmanövern erkannt. Ein Blockieren der Räder wird durch eine übliche ABS-Regelung verhindert. Bei dem unter dem Begriff "Sonder-ABS" erweiterten System wird zu der üblichen ABS-Regelung eine zusätzliche radselektive Beeinflussung des Bremsdruckes ermöglicht. Wenn bei Kurvenfahrt vom Fahrer ein Teilbremsen ausgelöst wird, wird ein gepulster Druckaufbau bzw. eine Verminderung des Bremsdrukkes am kurveninneren Hinterrad oder an den kurveninneren Vorder- und Hinterrädern mittels der ohnehin vorhandenen Aktuatoren eines ABS-/ASC-Regelsystems vorgenommen. Unter einem Teilbremsen wird insbesondere eine Bremsbetätigung derart verstanden, daß höchstens an einem Rad der angetriebenen Achse oder höchstens an beiden Rädern der nicht angetriebenen Achse eine ABS-Regelung eingeleitet wird.

Bei diesem bekannten System wird die Kurvenfahrt durch das Überschreiten einer bestimmten Querbeschleunigungsschwelle erkannt, wobei die Querbeschleunigung aus der Fahrgeschwindigkeit und dem Signal eines Lenkwinkelsensors wirklichkeitsnah ermittelt wird.

Ein ähnliches Antischlupf-Bremsregelsystem, bei dem abhängig von der Querbeschleunigung radselektive Bremseingriffe vorgenommen werden, ist auch aus der EP-A-0 128 582 bekannt.

Nach dem Gegenstand der noch nicht veröffentlichten DE 195 10 104 wird alternativ eine Kurvenerkennung durch die Berechnung eines ersten, der Hinterachs-Querbeschleunigung proportionalen Ist-Wertes aus der Differenz der Raddrehzahlen der Hinterräder und/oder durch die Berechnung eines zweiten, der Vorderachs-Querbeschleunigung proportionalen Ist-Wertes aus der Differenz der Raddrehzahlen der Vorderräder vorgenommen. Hierbei wird eine Kurvenerkennung ermöglicht, die auf zusätzliche Sensorvorrichtungen, wie z. B. Lenkwinkelsensoren oder Querbeschleunigungssensoren, verzichtet und lediglich ohnehin vorhandene Raddrehzahlsensoren multifunktional ausnützt. Ergänzend sei darauf hingewiesen, daß unter dem Begriff Kurvenerkennung nicht nur das Ausmaß sondern z.B. auch die Art (Rechtskurve, Linkskurve) einer Kurve verstanden wird.

Bei den bekannten Regelsystemen wird ein bestimmter Betrag der Querbeschleunigung bzw. einer der Querbeschleunigung proportionelen Größe definiert, durch den lediglich die Entscheidung über das Vorliegen oder Nicht-Vorliegen einer Kurvenfahrt ermöglicht wird. Bei Vorliegen einer Kurvenfahrt bzw. bei Überschreiten des definierten Betrags wird unabhängig vom Ausmaß der Kurve ausschließlich eine kurvenbezogene querstabilitätserhöhende Maßnahme getroffen. Hierbei wird also lediglich ein querstabilitätsbeeinflussender Fahrzeugumgebungsparameter berücksichtigt. Bei Versuchen hat sich jedoch herausgestellt, daß insbesondere bei hoher Fahrzeuggeschwindigkeit auch fahrzeugkonstruktionsbedingte Parameter, wie Torsionsbewegungen, schon bei geringer Querbeschleunigung zu instabilen Zuständen führen können.

Es ist Aufgabe der Erfindung, ein Regelsystem eingangs genannter Art derart zu verbessern, daß derartige durch fahrzeugkonstruktionsbedingte Parameter verursachte und schon bei geringer Querbeschleunigung zur Wirkung kommende instabile Zustände verhindert werden.

Diese Aufgabe wird durch die kennzeichnenden Merkmale des Patentanspruchs 1 gelöst.

Erfindungsgemäß wird eine symmetrische Verminderung des Bremsdrukkes an beiden Rädern einer Achse, vorzugsweise der angetriebenen Achse, vorgenommen, wenn der Betrag der der Querbeschleunigung proportionalen Größe größer als ein erster unterer Schwellwert ist.

Voraussetzungen für die symmetrische Verminderung des Bremsdruckes an beiden Rädern einer Achse sind also das Vorliegen zumindest einer leichten Kurve, eine gleichzeitige ununterbrochene Bremsbetätigung in Form eines Teilbremsens, wie vorher definiert, und optional auch eine Fahrzeuggeschwindigkeit, die oberhalb einer vorgegebenen Schwelle von beispielsweise ca. 110 km/h liegt.

Die symmetrische Verminderung des Bremsdruckes an beiden Rädern der angetriebenen Achse während der Beibehaltung des durch den Fahrer vorgegebenen höheren Vorsteuerbremsdruckes an den Rädern der nicht angetriebenen Achse bewirkt eine Stabilisierung des Fahrzeugs durch die Erzeugung ähnlicher Kräfte, die auch durch ein aktives Gegenlenken der Räder der angetriebenen Achse (im durchgeführten Versuch der Hinterachse) entstehen.

Durch diese Erfindung wird eine wirksame und kostengünstige Stabilisierung des Fahrzeugs gegenüber fahrzeuginternen instabilitätserzeugenden Parametern erreicht.

Gemäß einer vorteilhaften Weiterbildung der Erfindung nach Patentanspruch 2 wird bei einem Vorzeichenwechsel der der Querbeschleunigung proportionalen Größe während beibehaltener Bremsbetätigung die symmetrische Verminderung des Bremsdruckes an beiden Rädern einer Achse vorgenommen, wenn der Betrag der der Querbeschleunigung proportionalen Größe größer als der Betrag eines zweiten unteren Schwellwertes ist, der kleiner als der Betrag des ersten unteren Schwellwertes aber größer als Null ist.

Diese Weiterbildung kommt insbesondere bei einer Doppelkurve, z. B. einer unmittelbaren Links-/Rechtsfolge bei einer Kurvenfahrt, zur Wirkung. Bei unmittelbar aufeinanderfolgenden Kurvenrichtungsänderungen wird das Ansprechverhalten der erfindungsgemäßen Maßnahme zur Stabilitätserhöhung auf die nach der ersten Kurve folgende(n) Kurve(n) noch empfindlicher ausgestaltet.

Gemäß einer weiteren vorteilhaften Ausgestaltung der Erfindung nach Patentanspruch 3 wird eine unsymmetrische Verminderung des Bremsdruckes durch die gegenüber der Verminderung am kurvenäußeren Rad stärkere Verminderung des Bremsdruckes am kurveninneren Rad vorgenommen, wenn der Betrag der der Querbeschleunigung proportionalen Größe einen vorgegebenen oberen Schwellwert überschreitet, dessen Betrag größer als die Beträge der unteren Schwellwerte ist.

Hierbei wird davon ausgegangen, daß ab einem bestimmten Ausmaß der Kurve die Auswirkungen der kurvenbezogenen externen Parameter die Auswirkungen der fahrzeugkonstruktionsbezogenen internen Parameter übertreffen, so daß auf die bekannten kurvenbezogenen stabilitätserhöhenden Maßnahmen übergegangen wird.

Ergänzend wird darauf hingewiesen, daß allgemein vorzugsweise die Verminderung des Bremsdruckes schlagartig eingeschaltet, jedoch zeitverzögert und möglichst komfortabel wieder ausgeschaltet wird.

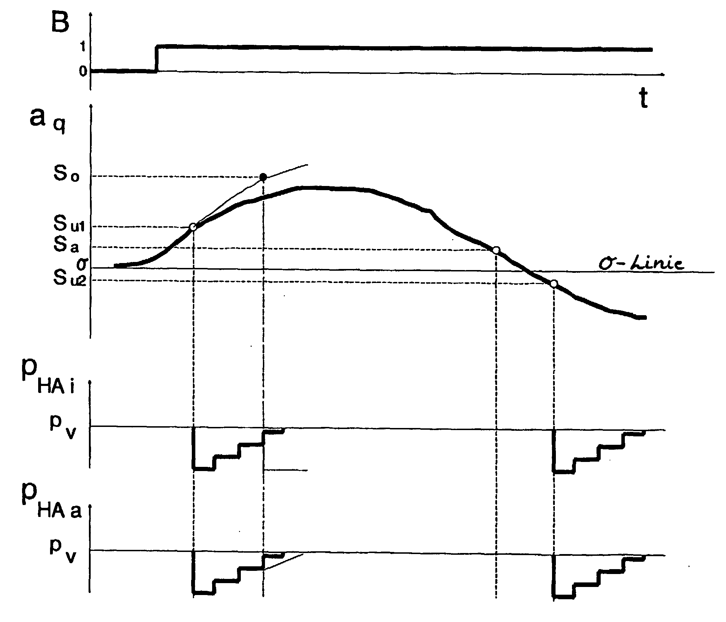

In der Zeichnung ist ein Ausführungsbeispiel der Erfindung dargestellt. Sie zeigt ein erfindungsgemäßes ABS-/ASC-Regelsystem am Beispiel einer Doppelkurve.

Zum besseren Verständnis der Erfindung wird zunächst folgendes definiert: Bei einem Kraftfahrzeug, das z. B. eine Linkskurve befährt, ist das vordere, kurveninnere Rad das linke Vorderrad und das hintere, kurveninnere Rad das linke Hinterrad. Das vordere, kurvenäußere Rad und das hintere, kurvenäußere Rad sind in einer Linkskurve die jeweils rechten Räder der Vorder- und der Hinterachse. Entsprechend ist bei einer Rechtskurve beispielsweise das vordere, kurveninnere Rad das rechte Vorderrad.

Das obere, erste Diagramm zeigt über der Zeit t die Ein- und Ausschaltzustände (B=1; B=0) einer Bremsbetätigung, die beispielsweise durch das Bremssignal B eines am Brempedal vorhandenen Bremslichtschalters in einem dem ABS-/ASC-Regelsystem zugeordneten, hier nicht dargestellten elektronischen Steuergerät erfaßbar sind.

Durch eine im Steuergerät vorhandene Auswerteeinheit wird das Querbeschleunigungssignal a_{q} als eine der Querbeschleunigung proportionale Größe aus Eingangssignalen des Steuergeräts gebildet und mit folgenden, in der Auswerteeinheit gespeicherten Schwellwerten verglichen (vgl. zweites Diagramm):
mit dem Betrag Sᵤ₁ eines ersten unteren Schwellwerts
mit dem Betrag Sᵤ₂ eines zweiten unteren Schwellwerts
mit dem Betrag Sₒ eines oberen Schwellwerts und
mit dem Betrag Sₐ eines Ausschaltschwellwerts

Im dritten und vierten Diagramm werden die Verläufe p_{HAi} und p_{HAa} des Bremsdruckes am jeweils kurveninneren und kurvenäußeren Rad der Hinterachse (HA) als angetriebene Achse dargestellt. Die Verläufe des Bremsdruckes an den Rädern der Vorderachse bzw. der nicht angetriebenen Achse sind hier nicht dargestellt und verhalten sich entsprechend dem durch den Fahrer vorgegebenen Vorsteuerbremsdruck pᵥ.

Der Verlauf des Querbeschleunigungssignals a_{q} über der Zeit t zeigt eine Doppelkurve an. Beispielsweise ist dem positiven Bereich des Querbeschleunigungssignals a_{q} eine Linkskurve und dem negativen Bereich eine Rechtskurve zugeordnet. Im vorliegenden Beispiel liegt also ein unmittelbarer Übergang einer Linkskurve in eine Rechtskurve vor.

Bei Eintritt in die Linkskurve wird bereits vor Überschreiten eines Schwellwerts eine Bremsbetätigung durch den Übergang des Ausschaltzustands B=0 in den Einschaltzustand B=1 erkannt. Voraussetzung für die erfindungsgemäße Verminderung des Bremsdruckes ist zum einen der Einschaltzustand B=1 der Bremsbetätigung sowie das Vorliegen eines Teilbremsens. Wird ein Vollbremsen im Gegensatz zum Teilbremsen durch den Fahrer vorgenommen, d.h. blockieren z.B. die beiden Räder der angetriebenen Achse oder mehr als drei Räder, wird eine übliche ABS-Regelung vorgenommen. Dies ist jedoch nicht Gegenstand der Erfindung.

Wird durch das Querbeschleunigungssignal a_{q} der Betrag Sᵤ₁ des ersten unteren Schwellwertes in der ersten Kurve, hier in der Linkskurve, überschritten, werden der Bremsdruck p_{HAi} des kurveninneren und der Bremsdruck p_{HAa} des kurvenäußeren Rades der angetriebene Achse (Hinterachse HA) symmetrisch, d.h. im selben Ausmaß und synchron, gegenüber dem Vorsteuerbremsdruck pᵥ vermindert. Die symmetrische Bremsdruck-Verminderung ist unabhängig davon, ob eine Links- oder Rechtskurve vorliegt.

Der Verlauf der symmetrischen Bremsdruckverminderung kann beliebig, z.B. kontiniuierlich und zeit- oder ereignisgesteuert, sein. Im dargestellten Beispiel wird zunächst abrupt eine maximale Verminderung und anschließend innerhalb eines vorgegebenen Zeitfensters, z.B. 1 s (zeitgesteuert), eine quasikontinuierliche stufenförmige Erhöhung des Bremsdruckes p_{HAi} und p_{HAa} zurück auf den Vorsteuerbremsdruck pᵥ vorgenommen.

Wird während der Verminderung des Bremsdruckes p_{HAi} und p_{HAa} gegenüber dem Vorsteuerbremsdruck pᵥ der Betrag Sₐ des Ausschaltschwellwertes unterschritten wird die Verminderung abrupt (ereignisgesteuert) auf den Vorsteuerbremsdruck pᵥ zurückgestellt (hier nicht dargestellt).

Findet ohne Unterbrechung der Bremsbetätigung (B bleibt 1) ein Vorzeichenwechsel der der Querbeschleunigung proportionalen Größe a_{q} statt bzw. bewegt sich das Querbeschleunigungssignal a_{q} vom positiven in den negativen Bereich des zweiten Diagramms (Trennbereich 0-Linie), d.h. geht die Linkskurve unmittelbar in eine Rechtskurve über, gilt zum Einschalten der symmetrischen Bremsdruck-Verminderung anstelle des Betrags Sᵤ₁ des ersten unteren Schwellwertes der Betrag Sᵤ₂ des zweiten unteren Schwellwertes, der kleiner als der des ersten unteren Schwellwertes ist.

Überschreitet, wie durch die dünne Linie alternativ dargestellt ist, das Querbeschleunigungssignal a_{q} den Betrag Sₒ des oberen Schwellwertes - hier in der Linkskurve-, wird der Bremdruck p_{HAi} im kurveninneren Rad der angetriebenen Achse, d.h. hier im linken Hinterrad, wieder vermindert, während der Bremdruck p_{HAa} im kurvenäußeren Rad der angetriebenen Achse, d.h. hier im rechten Hinterrad, möglichst schnell aber komfortabel auf den Vorsteuerdruck pᵥ erhöht bzw. zurückgestellt wird ( vgl. dünne Linien).

Optional kann die symmetrische Bremsdruck-Verminderung in den genannten Fällen jedoch unterbleiben, wenn die Fahrzeuggeschwindigkeit nicht eine definierte obere Schwelle (z.B. 110 km/h) überschritten hat (hier nicht dargestellt).

Mit diesem erfindungsgemäßen Ausführungsbeispiel kann auf kostengünstige Weise eine optimale fahrzustandsadaptierte Stabilitätserhöhung erreicht werden.

## Patentansprüche

1. ABS- und/oder ASC-Regelsystem für Kraftfahrzeuge mit einer Auswerteeinheit zur Ermittlung einer der Querbeschleunigung proportionalen Größe (a_{q}) und mit Aktuatoren zur Verminderung des Bremsdruckes an mindestens einem Rad bei Kurvenfahrt und bei gleichzeitiger Bremsbetätigung (B=1), **dadurch gekennzeichnet, daß** die Auswerteeinheit Mittel äufweist, durch die eine symmetrische Verminderung des Bremsdruckes (p_{HAi}, p_{HAa}) an beiden Rädern einer Achse vorgenommen wird, wenn der Betrag der der Querbeschleunigung proportionalen Größe (a_{q}) größer als ein erster unterer Schwellwert (Sᵤ₁) ist.

2. ABS- und/oder ASC-Regelsystem nach Anspruch 1, **dadurch gekennzeichnet, daß** die Auswerteeinheit Mittel aüfweist, durch die nach einem Vorzeichenwechsel der der Querbeschleunigung proportionalen Größe (a_{q}) während beibehaltener Bremsbetätigung (B=1) die symmetrische Verminderung des Bremsdruckes (p_{HAi}, p_{HAa}) an beiden Rädern einer Achse vorgenommen wird, wenn der Betrag der der Querbeschleunigung proportionalen Größe (a_{q}) größer als der Betrag eines zweiten unteren Schwellwertes (Sᵤ₂) ist, der kleiner als der Betrag des ersten unteren Schwellwertes (Sᵤ₁) aber größer als Null ist.

3. ABS- und/oder ASC-Regelsystem nach Anspruch 1 oder 2, **dadurch gekennzeichnet, daß** die Auswerteeinheit Mittel aüfweist, durch die eine unsymmetrische Verminderung des Bremsdruckes (p_{HAi}, p_{HAa}) durch die gegenüber der Verminderung am kurvenäußeren Rad stärkere Verminderung des Bremsdruckes am kurveninneren Rad vorgenommen wird, wenn der Betrag der der Querbeschleunigung proportionalen Größe (a_{q}) einen vorgegebenen oberen Schwellwert (Sₒ) überschreitet, dessen Betrag größer als die Beträge der unteren Schwellwerte (S_{u1;} Sᵤ₂) ist.

## Claims

1. An ABS and/or ASC control system for motor vehicles comprising an evaluating unit for determining a quantity (a_{q}) proportional to the transverse acceleration and actuators for reducing the brake pressure on at least one wheel during travel round a bend and simultaneous brake actuation (B = 1), **characterised in that** the evaluating unit comprises means whereby a symmetrical reduction in the brake pressure (p_{HAi}, p_{HAa}) on both wheels of an axle is made if the value of the quantity (a_{q}) proportional to the transverse acceleration is greater than a first lower threshold value (Sᵤ₁).

2. An ABS andlor ASC control system according to claim 1, **characterised in that** the evaluating unit comprises means whereby after a change of sign of the quantity (a_{q}) proportional to the transverse acceleration while maintaining the brake actuation (B = 1) the symmetrical reduction in the brake pressure (p_{HAi}, p_{HAa}) on both wheels of an axle is made if the value of the quantity (a_{q}) proportional to the transverse acceleration is greater than a second lower threshold value (Sᵤ₂) which is less than the first lower threshold value (Sᵤ₁) but greater than zero.

3. An ABS and/or ASC control system according to claim 1 or 2, **characterised in that** the evaluating unit comprises means whereby an asymmetrical reduction in brake pressure (p_{HAi}, p_{HAa}) by reducing the brake pressure on the inner wheel more strongly than the reduction on the outer wheel is made if the value of the quantity (a_{q}) proportional to the transverse acceleration exceeds a preset upper threshold (Sₒ), the value of which is greater than the values of the lower thresholds (Sᵤ₁; Sᵤ₂).

## Revendications

1. Système d'antiblocage/antipatinage de véhicules automobiles comprenant une unité d'exploitation pour déterminer une grandeur (aq) proportionnelle à l'accélération transversale et des actionneurs pour réduire la pression de frein d'au moins une roue dans un déplacement en courbe, le frein étant en même temps actionné (B= 1),
**caractérisé en ce que**
l'unité d'exploitation comporte des moyens pour effectuer une réduction symétrique de la pression de frein (p_{HAI}, p_{HAA}) sur les deux roues d'un essieu si l'amplitude de la grandeur (a_{q}) proportionnelle à l'accélération transversale dépasse un premier seuil inférieur (Sᵤ₁).

2. Système d'antiblocage/antipatinage selon la revendication 1,
**caractérisé en ce que**
l'unité d'exploitation comporte des moyens qui après un changement de signe algébrique de la grandeur (a_{q} proportionnelle à l'accélération-transversale, effectue pendant que l'on conserve l'actionnement du frein (B=I) une réduction symétrique de la pression de freins (p_{HAI}, p_{HAA}) sur les deux roues d'un essieu, si l'amplitude de la grandeur (a_{q}) proportionnelle à l'accélération transversale dépasse l'amplitude d'un second seuil inférieur (Sᵤ₂) plus petit que l'amplitude du premier seuil inférieur (Sᵤ₁) mais supérieur à 0.

3. Système d'antiblocage/antipatinage selon la revendication 1 ou 2,
**caractérisé en ce que**
l'unité d'exploitation comporte des moyens qui assurent une réduction asymétrique de la pression de frein (p_{HAI}, p_{HAA}) par la réduction plus forte de la pression de frein de la roue intérieure de la courbe que de celle à l'extérieur de la courbe si l'amplitude de la grandeur (a_{q}), proportionnelle à l'accélération transversale dépasse un certain seuil supérieur prédéterminé Sₒ dont l'amplitude est supérieure à celle des seuils inférieurs (Sᵤ₁, Sᵤ₂).
